# EUROPEAN PATENT APPLICATION

(11) **EP 3 632 604 A1**
(43) Date of publication of application: **08.04.2020**
(21) Application number: 19196521.9
(22) Date of filing: 10.09.2019
(51) Int. Cl.: B23H 7/26, B23H 1/10, B23H 9/14

(54) **ELECTRODE HOLDER**

(30) Priority: 05.10.2018 GB 201816240
(71) Applicant: Rolls-Royce plc, London N1 9FX (GB)
(72) Inventor: McAuley, Michael, Derby, Derbyshire DE24 8BJ (GB); O'Toole, James, Derby, Derbyshire DE24 8BJ (GB); McAleer, Michael, Derby, Derbyshire DE24 8BJ (GB)
(74) Representative: Rolls-Royce plc

(57) **Abstract**

The present disclosure concerns an electrode holder (100, 200) for electrical discharge machining, the electrode holder (100) comprising: a frame (103) having a first end (104) and an opposing second end (105); and a cartridge (110, 200) moveably mounted to the frame (103) and having a resilient sealing member (201) with a series of holes (308) each configured to receive a first end of one of a plurality of tubular electrodes (102, 301), the cartridge (110, 200) having an inlet for receiving a pressurised supply of dielectric fluid for transmission to each of the tubular electrodes (102, 301), wherein a cross-section of the resilient sealing member (201) in a plane parallel to a longitudinal direction of the tubular electrodes (102, 301) has a narrow central portion (305) between broader outer portions (306, 307).

## Description

The present disclosure concerns an electrode holder for electrical discharge machining.

Electrical discharge machining (EDM) is a machining technique that is particularly suitable for metallic components that are difficult to machine by conventional techniques due to their hardness. High temperature alloys, for example, such as those used for turbine blades and other components for high temperature portions of gas turbine engines, may be machined using EDM to provide small holes, which are required to provide air cooling channels.

Machining holes using EDM is typically done using a tubular electrode, through which is passed a dielectric fluid (typically deionised water) at high pressure. Bringing the open end of the tubular electrode close to the workpiece to be machined allows a high electric field to be set up between the electrode and the workpiece, resulting in local electrical breakdown across the dielectric and consequent erosion of both the workpiece and the electrode. As the electrode is moved into the piece, a hole is formed. Due to gradual erosion of the electrode, a longer section of tube needs to be used to replenish the end that becomes eroded away during machining.

For machining multiple holes simultaneously, a series of electrodes can be used that are arranged in parallel and moved together into the piece to be machined. This arrangement, as for example disclosed in GB2363589B, can be particularly useful for machining multiple cooling holes in turbine blades, which can thereby be much more rapidly machined than by using a single electrode. To hold the electrodes in position during machining, a housing may be used that surrounds most of the length of each electrode, which may typically be several hundred millimetres long. A pressurised supply of dielectric fluid is provided to the interior of the cartridge to supply each of the tubular electrodes. A problem with this approach is that the geometric shape of the housing can lead to stress build-up, resulting in cracking and leaking of the housing due to the high pressures (which may be up to 100 bar) that may be required. A further problem is in maintaining a seal against the electrodes, particularly when multiple electrodes are arranged in parallel within the housing. As disclosed in GB2363598, such a seal may typically be provided using a resilient electrically insulating seal surrounding the electrodes, the seal being compressed by high pressure dielectric fluid within the cartridge that causes a piston to displace, creating lateral deformation to bring the seal material into contact with the electrodes. A problem with this approach is that the high pressure fluid (typically water) is used to create the seal, which can lead to leakage and excess fluid flowing through the system. This may lead to the performance and efficiency of the seal dropping off over time, requiring ongoing maintenance of the tool.

A further example of an apparatus for EDM using tubular electrodes is disclosed in GB2550592A, in which a resilient member with apertures for electrodes is compressed by first and second parts of a housing that are fastened together using screws or a quick release skewer.

According to a first aspect there is provided an electrode holder for electrical discharge machining, the electrode holder comprising:
a frame having a first end and a second opposing end; and
a cartridge moveably mounted to the frame and having a resilient sealing member with a series of holes each configured to receive a first end of one of a plurality of tubular electrodes, the cartridge having an inlet for receiving a pressurised supply of dielectric fluid for transmission to each of the tubular electrodes,
wherein a cross-section of the resilient sealing member in a plane parallel to a longitudinal direction of the tubular electrodes has a narrow central portion between broader outer portions.

An advantage of the electrode holder over existing designs for holding multiple tubular electrodes is that the shape of the sealing member, having a narrowed central portion allows for an improved seal against multiple tubular electrodes by allowing the broader outer portions to compress further.

The resilient sealing member may comprise any suitable resilient material such as an elastomer, for example a silicone rubber.

The resilient sealing member may be positioned within a recess in an outer housing of the cartridge, the recess having a slot extending through to an outer face of the cartridge, the slot having a width narrower than a width of the resilient sealing member. The slot allows the electrodes to pass through from the outer face of the cartridge to an inner volume of the cartridge, and allows the resilient sealing member to be compressed to form an effective seal against the electrodes.

The cartridge may comprise an inner housing defining the internal volume, the inner housing comprising a protrusion configured to fit into the recess to provide a compressive force on the resilient sealing member in a direction parallel to the longitudinal direction of the tubular electrodes. The cartridge may comprise a biasing element, for example a spring, biasing the inner housing against the outer housing to provide the compressive force against the resilient sealing member. The cartridge may alternatively comprise a fastener arrangement comprising a plurality of bolts and corresponding holes connecting the inner and outer housings together. The plurality of bolts may for example extend through the outer housing and secure to a corresponding plurality of holes in the inner housing.

The cartridge may be suspended from the second end of the frame, for example using a pulley spring that is configured to provide a biasing force towards the second end of the frame that is greater than the weight of the cartridge, resulting in a tension applied between the cartridge and the second electrode chuck, thereby preventing the electrodes from buckling. An advantage of this is that the cartridge is loosely held relative to the frame and can move relative to the frame while maintaining separation of the electrodes relative to each other.

The electrode holder may further comprise:
a first electrode chuck fixed to the first end of the frame and configured to hold the plurality of tubular electrodes in parallel and at a fixed separation from each other; and
a second electrode chuck mounted to the frame and configured to clamp the plurality of tubular electrodes in parallel and at the fixed separation from each other, the second electrode chuck being moveable relative to the frame along the longitudinal direction of the tubular electrodes.

The skilled person will appreciate that, except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

Embodiments will now be described by way of example only, with reference to the Figures, in which:
**Figure 1** is a schematic diagram of an example electrode holder with tubular electrodes in place;
**Figure 2** is sectional view of a portion of a cartridge for holding multiple tubular electrodes;
**Figure 3** is a partial schematic sectional view of the cartridge with a tubular electrode in place within the sealing member; and
**Figure 4** is a partial schematic sectional view of the cartridge with a tubular electrode in place within the sealing member, with a force applied to cause the sealing member to provide a seal against the tubular electrode.

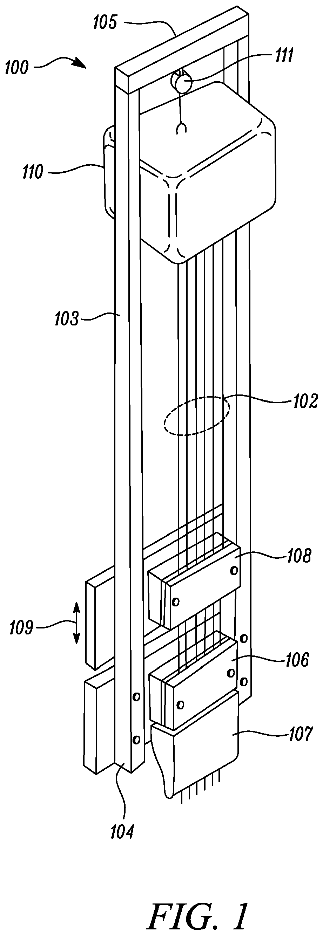

Figure 1 illustrates an example electrode holder 100, holding a plurality of electrodes 102 in place. In the example illustrated, five electrodes are held in place by the holder 100. Other numbers of electrodes may be held using the same principle, limited only by the practical size limit of the frame and the available power for machining.

The holder 100 comprises a frame 103 having a first end 104 and an opposing second end 105. Fixed to the first end 103 is a first electrode chuck 106. The chuck 106 is configured to hold, i.e. to clamp in place, the electrodes 102, maintaining the electrodes 102 in parallel arrangement and at a fixed separation from each other but allowing the electrodes 102 to slide back and forth through the chuck 106. An optional nosepiece 107 is attached to the front of the first electrode chuck 106, through which the electrodes 102 pass. The nosepiece 107 may be shaped to match the contour of the piece to be machined, for example to match the curved contour of the side of a turbine blade.

A second electrode chuck 108 is mounted to the frame 103 and is configured to clamp the electrodes 102 in parallel and at the same fixed separation as defined by the first electrode chuck 106. The second electrode chuck 108 is moveable relative to the frame 103, as indicated by arrow 109, such that the second electrode chuck 108 may move in a longitudinal direction of the electrodes 102. With the second electrode chuck 108 clamping the electrodes 102, movement of the second electrode chuck 108 towards the first end 104 of the frame 103 causes the electrodes to extend further from the first electrode chuck 106, and through the nosepiece 107 if used.

A cartridge 110 is mounted to the frame 103 such that it can also move relative to the frame in the same direction as the second electrode chuck 108. The cartridge 110 has a series of holes (not shown), each hole being configured to receive one of the electrodes 102. The series of holes is arranged in the same fixed separation as for the first and second electrode chucks 106, 108, so that the electrodes 102 are held in parallel between the cartridge 110 and the first electrode chuck 106.

The cartridge 110 comprises an inlet (not shown in Figure 1) for receiving a pressurised supply of dielectric fluid for transmission to each of the electrodes 102. An internal volume of the cartridge 110 connects the inlet to each of the electrodes 102.

The cartridge 110 shown in Figure 1 is suspended from the second end 105 of the frame 103 by a pulley spring 111. This arrangement allows the cartridge 110 to move freely relative to the frame 103 in the same direction as the second electrode chuck 108, with the frame 103 vertically oriented, while maintaining tension in the electrodes 102 to prevent buckling of the electrodes 102. The pulley spring 111 may be configured to counteract at least the weight of the cartridge 110.

During operation, as the pressurised dielectric fluid supply is provided to the cartridge 110 and thereby to the electrodes 102, the second electrode chuck 108 is moved towards the first electrode chuck 106 as the electrodes 102 machine holes in the workpiece. The electrodes 102 move in parallel into the workpiece as the second electrode chuck 108 is moved until the machining operation is completed or until the second electrode chuck 108 reaches the first electrode chuck 106. The electrodes 102 can then be withdrawn from the workpiece by moving the second electrode chuck 108 away from the first electrode chuck 106. To allow the electrodes 102 to be further extended, the second electrode chuck 108 can be unclamped from the electrodes 102 and moved further away from the first electrode chuck 106. After clamping the second electrode chuck 108 again on the electrodes 102, a further machining operation can be done.

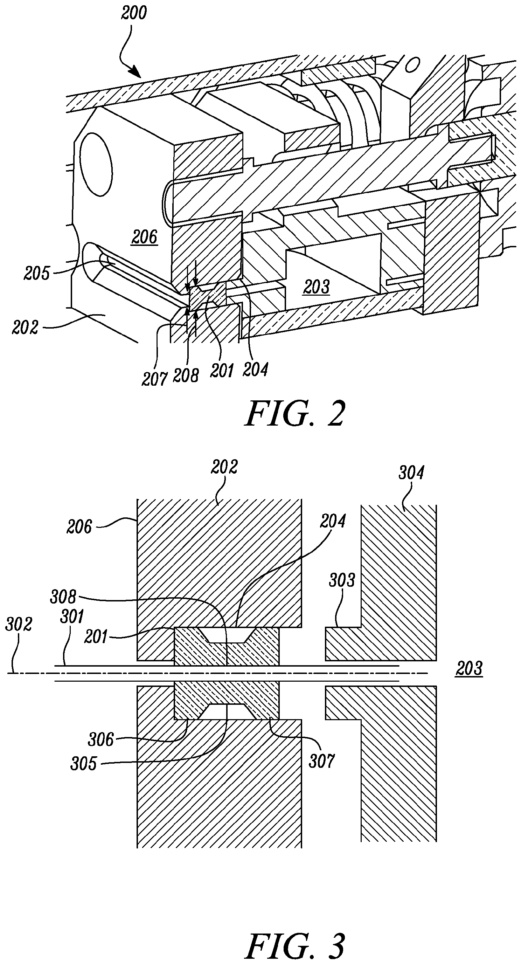

Figure 2 illustrates in partial sectional view an example of a cartridge 200 in which a resilient sealing member 201 provides a seal against multiple electrodes (not shown) passing through an outer housing 202 of the cartridge 200 into an internal volume 203 through which a pressurised dielectric fluid is provided. The resilient sealing member 201 is disposed in a recess 204 of the outer housing 202, the recess 204 having a slot 205 extending through to an outer surface 206 of the outer housing 202. The slot 205 has a width 207 that is narrower than a width 208 of the resilient sealing member 201. The slot 205 allows the electrodes (not shown in Figure 2) to pass through from the outer surface 206 of the outer housing 202 to the internal volume 203 and allows the resilient sealing member 201 to be compressed to form an effective seal against the electrodes.

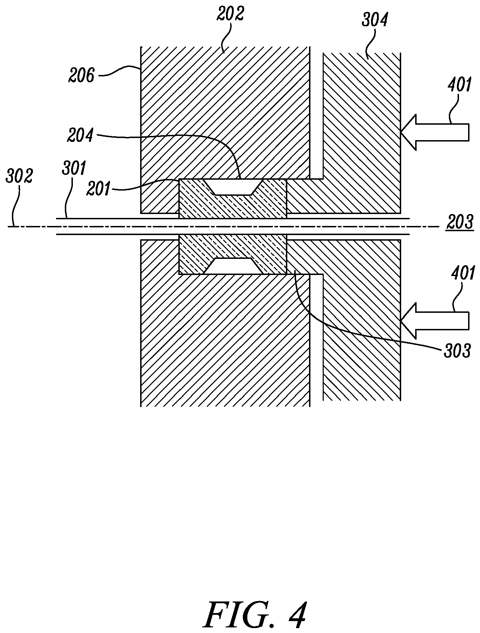

Figures 3 and 4 are schematic diagrams showing in further detail how the resilient sealing member 201 may provide a seal against multiple tubular electrodes, one of which 301 is illustrated passing through a hole 308 in the sealing member 201. Figure 3 shows the sealing member 201 prior to being compressed, and Figure 4 following compression by a force 401 acting in a direction parallel to the longitudinal axis 302 of the tubular electrode 301. The force 401 acts on a protrusion 303 of an inner housing 304 within which is defined the internal volume 203 of the cartridge 200. The protrusion 303 fits within the recess 204, preferably with a sliding fit, and acts on the sealing member 201 to compress the sealing member 201 along the longitudinal axis 302.

The cross-sectional shape of the sealing member 201, having a narrower central portion 305 between broader outer portions 306, 307, allows the sealing member 201 to compress further than a sealing member of uniform section, which results in an improved fluid seal being formed against the tubular electrode 301 by deformation of the elastomeric material under the uniaxial force 401 provided via the protrusion 303 on the inner housing 304. This is because more of the uniaxial force on the sealing member 201 is transmitted to the broader portion 306 that is further away from the protrusion 303, rather than being reduced due to frictional forces against the wall of the recess 204. As a result, either an improved seal can be obtained for the same applied force, or the same seal obtained with a reduced applied force.

The axial force 401 may for example be provided by a biasing element, such as a spring 209 (shown in Figure 2), loaded against the inner housing 304, or may alternatively be provided by a fastener arrangement of the type described in GB2550592A, for example comprising a plurality of bolts and corresponding holes connecting the inner and outer housings 304, 202 together.

Other components of the electrode holder, and the EDM apparatus in general, may be similar to those described in GB255092A.

Except where mutually exclusive, any of the features may be employed separately or in combination with any other features and the disclosure extends to and includes all combinations and sub-combinations of one or more features described herein.

## Claims

1. An electrode holder (100) for electrical discharge machining, the electrode holder (100) comprising:
a frame (103) having a first end (104) and an opposing second end (105); and
a cartridge (110, 200) moveably mounted to the frame (103) and having a resilient sealing member (201) with a series of holes (308) each configured to receive a first end of one of a plurality of tubular electrodes (102, 301), the cartridge (110, 200) having an inlet for receiving a pressurised supply of dielectric fluid for transmission to each of the tubular electrodes (102, 301),
wherein a cross-section of the resilient sealing member (201) in a plane parallel to a longitudinal direction of the tubular electrodes (102, 301) has a narrow central portion (305) between broader outer portions (306, 307).

2. The electrode holder (100) of claim 1 wherein the resilient sealing member (201) is positioned within a recess (204) in an outer housing (202) of the cartridge (110, 200), the recess (204) having a slot (205) extending through to an outer face (206) of the outer housing (202), the slot (205) having a width (207) narrower than a width (208) of the resilient sealing member (201).

3. The electrode holder (100) of claim 2 wherein the cartridge (110, 200) comprises an inner housing (304) defining an internal volume (203), the inner housing (304) comprising a protrusion (303) configured to fit into the recess (204) to provide a compressive force on the resilient sealing member (201) in a direction parallel to the longitudinal direction of the tubular electrodes (102, 301).

4. The electrode holder (100) of claim 3 wherein the cartridge (110, 200) comprises a biasing element (209) arranged to bias the inner housing (304) against the outer housing (202) to provide the compressive force against the resilient sealing member (201).

5. The electrode holder (100) of claim 3 wherein the cartridge comprises a fastener arrangement comprising a plurality of bolts and corresponding holes connecting the inner and outer housings (304, 202) together.

6. The electrode holder (100) of any preceding claim wherein the cartridge (110, 200) is suspended from the second end (105) of the frame (103) by a pulley spring configured to provide a biasing force towards the second end (105) of the frame (103) that is greater than a weight of the cartridge (110, 200)

7. The electrode holder of any preceding claim further comprising:
a first electrode chuck (106) fixed to the first end (104) of the frame (103) and configured to hold the plurality of tubular electrodes (102) in parallel and at a fixed separation from each other; and
a second electrode chuck (108) mounted to the frame (103) and configured to clamp the plurality of tubular electrodes (102) in parallel and at the fixed separation from each other, the second electrode chuck (108) being moveable relative to the frame (103) along the longitudinal direction of the tubular electrodes (102).
